(19) Europäisches Patentamt / European Patent Office / Office européen des brevets

(11) **EP 4 525 385 A1**

(12) **EUROPEAN PATENT APPLICATION**
published in accordance with Art. 153(4) EPC

(43) Date of publication:
**19.03.2025 Bulletin 2025/12**

(21) Application number: **23802742.9**

(22) Date of filing: **05.05.2023**

(51) International Patent Classification (IPC):
**H04L 27/00** $^{(2006.01)}$

(52) Cooperative Patent Classification (CPC):
**H04L 27/00; H04W 72/1268; H04W 72/21; H04W 72/53**

(86) International application number:
**PCT/CN2023/092164**

(87) International publication number:
**WO 2023/216970 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.05.2022 CN 202210495477**

(71) Applicant: **Vivo Mobile Communication Co., Ltd.
Dongguan, Guangdong 523863 (CN)**

(72) Inventors:
• **LI, Na
Dongguan, Guangdong 523863 (CN)**
• **ZENG, Chaojun
Dongguan, Guangdong 523863 (CN)**

(74) Representative: **Lavoix
Bayerstraße 83
80335 München (DE)**

(54) **INFORMATION REPORTING METHOD AND APPARATUS, AND COMMUNICATION DEVICE AND STORAGE MEDIUM**

(57)    This application discloses an information reporting method and apparatus, a communication device, and a storage medium, and pertains to the field of wireless communication technologies. The information reporting method in embodiments of this application includes: determining, by a terminal, UCI, where the UCI is used to indicate a releasable uplink transmission resource; and sending, by the terminal, the UCI to a network-side device.

```
┌─────────────────────────────────────────────────┐
│ A terminal determines UCI, where the UCI is      │
│ used to indicate a releasable uplink             │──  300
│ transmission resource                            │
└─────────────────────────────────────────────────┘
                        │
                        ▼
┌─────────────────────────────────────────────────┐
│ The terminal sends the UCI to a network-side     │──  301
│ device                                           │
└─────────────────────────────────────────────────┘
```

FIG. 3

EP 4 525 385 A1

## Description

## CROSS-REFERENCE TO RELATED APPLICATIONS

This application claims priority to Chinese Patent Application No. 202210495477.6, filed on May 7, 2022 and entitled "INFORMATION REPORTING METHOD AND APPARATUS, COMMUNICATION DEVICE, AND STORAGE MEDIUM", which is incorporated herein by reference in its entirety.

## TECHNICAL FIELD

This application pertains to the field of wireless communication technologies, and specifically, relates to an information reporting method and apparatus, a communication device, and a storage medium.

## BACKGROUND

In the conventional technology, a terminal (also referred to as user equipment, User Equipment, UE) may be configured with one or more configured grant (configured grant, CG) physical uplink shared channel (Physical Uplink Shared Channel, PUSCH) resources, where the CG PUSCH may be a type 1 or type 2 CG PUSCH. For the type 1 CG PUSCH, the terminal may perform transmission on this resource after higher layer configuration. For the type 2 CG PUSCH, the terminal may perform transmission on this resource after higher layer configuration and activation through DCI. Regardless of whether the CG PUSCH is the type 1 or type 2 CG PUSCH, after the CG PUSCH resource is configured or activated, the UE may transmit uplink data on the CG PUSCH when there is a service requirement. However, a base station side may only perform blind detection on the CG PUSCH resource to determine whether the UE is using the CG PUSCH. Even if the UE is not using the CG PUSCH, the base station cannot recycle the CG PUSCH for other purposes. This causes a waste of some uplink transmission resources.

In addition, for a downlink control information (Downlink Control Information, DCI) scheduled PUSCH (DG PUSCH), UE skipping may alternatively be supported. To be specific, when the UE has no data, transmission may not be performed on the PUSCH. However, the base station side may only perform blind detection to determine whether the UE is performing transmission on the PUSCH. Even if the UE is not performing transmission on the PUSCH, the base station cannot recycle the PUSCH for other purposes. This also causes a waste of some uplink transmission resources.

## SUMMARY

Embodiments of this application provide an information reporting method and apparatus, a communication device, and a storage medium, to resolve a resource waste problem caused by CG PUSCH or DG PUSCH skipping.

According to a first aspect, an embodiment of this application provides an information reporting method, including:

determining, by a terminal, UCI, where the UCI is used to indicate a releasable uplink transmission resource; and
sending, by the terminal, the UCI to a network-side device.

According to a second aspect, an embodiment of this application provides an information reporting method, including:

receiving, by a network-side device, UCI sent by a terminal; and
determining, by the network-side device, a releasable uplink transmission resource based on the UCI.

According to a third aspect, an embodiment of this application provides an information reporting apparatus, applied to a terminal and including:

a first determining module, configured to determine UCI, where the UCI is used to indicate a releasable uplink transmission resource; and
a sending module, configured to send the UCI to a network-side device.

According to a fourth aspect, an embodiment of this application provides an information reporting apparatus, applied to a network-side device and including:

a receiving module, configured to receive UCI sent by a terminal; and
a second determining module, configured to determine a releasable uplink transmission resource based on the UCI.

According to a fifth aspect, an embodiment of this application provides a terminal, where the terminal includes a processor and a memory, the memory stores a program or instructions capable of running on the processor, and when the program or instructions are executed by the processor, the method according to the first aspect is implemented.

According to a sixth aspect, an embodiment of this application provides a terminal, including a processor and a communication interface. The processor is configured to determine UCI, where the UCI is used to indicate a releasable uplink transmission resource. The communication interface is configured to send the UCI to a network-side device.

According to a seventh aspect, an embodiment of this application provides a network-side device, where the network-side device includes a processor and a memory, the memory stores a program or instructions capable of running on the processor, and when the program or instructions are executed by the processor, the method according to the second aspect is implemented.

According to an eighth aspect, an embodiment of this application provides a network-side device, including a processor and a communication interface. The communication interface is configured to receive UCI sent by a terminal. The processor is configured to determine a releasable uplink transmission resource based on the UCI.

According to a ninth aspect, an embodiment of this application provides an information reporting system, including a terminal and a network-side device. The terminal may be configured to perform the information reporting method according to the first aspect. The network-side device may be configured to perform the information reporting method according to the second aspect.

According to a tenth aspect, an embodiment of this application provides a readable storage medium, where the readable storage medium stores a program or instructions, and when the program or instructions are executed by a processor, the method according to the first aspect is implemented, or the method according to the second aspect is implemented.

According to an eleventh aspect, an embodiment of this application provides a chip, where the chip includes a processor and a communication interface, the communication interface is coupled to the processor, and the processor is configured to run a program or instructions to implement the method according to the first aspect, or implement the method according to the second aspect.

According to a twelfth aspect, an embodiment of this application provides a computer program or program product, where the computer program or program product is stored in a storage medium, and the computer program or program product is executed by at least one processor to implement the method according to the first aspect, or implement the method according to the second aspect.

In the embodiments of this application, a terminal may notify a network-side device of whether one or more specific uplink transmission resources are releasable by reporting UCI, so that the network-side device may release a redundant uplink transmission resource based on the UCI reported by the terminal. This reduces a waste of resources and improves resource utilization.

**BRIEF DESCRIPTION OF DRAWINGS**

FIG. 1 is a block diagram of a wireless communication system according to an embodiment of this application;

FIG. 2 is a schematic diagram of a type 1 CG PUSCH and a type 2 CG PUSCH according to an embodiment of this application;

FIG. 3 is a first schematic flowchart of an information reporting method according to an embodiment of this application;

FIG. 4 is a second schematic flowchart of an information reporting method according to an embodiment of this application;

FIG. 5 is a first schematic diagram of an implementation of an information reporting method according to an embodiment of this application;

FIG. 6 is a second schematic diagram of an implementation of an information reporting method according to an embodiment of this application;

FIG. 7 is a third schematic diagram of an implementation of an information reporting method according to an embodiment of this application;

FIG. 8 is a first schematic structural diagram of an information reporting apparatus according to an embodiment of this application;

FIG. 9 is a second schematic structural diagram of an information reporting apparatus according to an embodiment of this application;

FIG. 10 is a schematic structural diagram of a communication device according to an embodiment of this application;

FIG. 11 is a schematic diagram of a hardware structure of a terminal according to an embodiment of this application; and

FIG. 12 is a schematic structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6th generation (6th Generation, 6G) communication system.

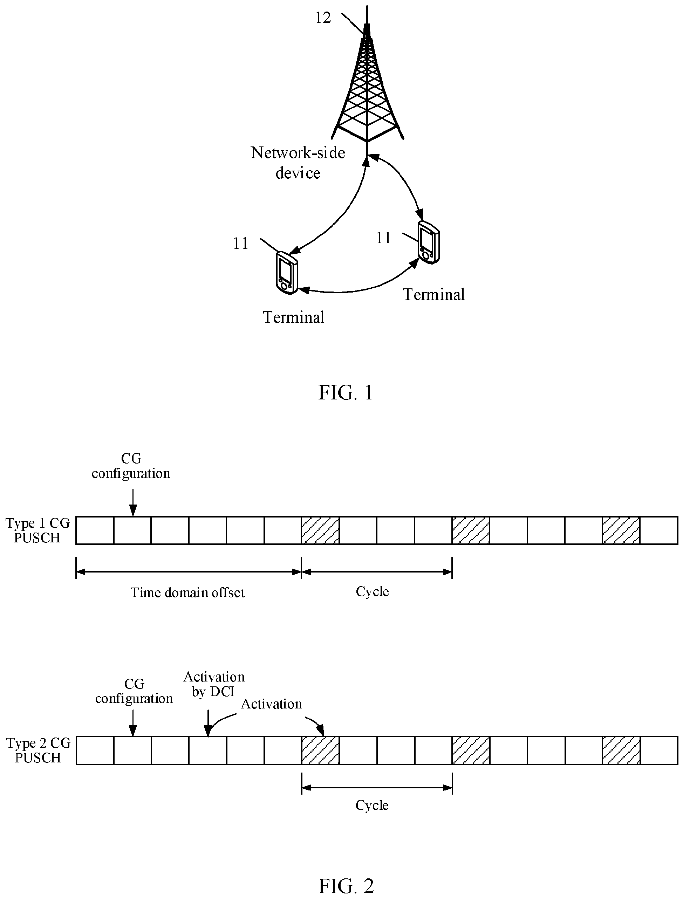

FIG. 1 is a block diagram of a wireless communication system according to an embodiment of this application. As shown in FIG. 1, the wireless communication system includes a terminal 11 and a network-side device 12. The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited.

For ease of understanding the technical solutions in the embodiments of this application, technical content related to the embodiments of this application is described below.

(1) Extended reality (eXtended Reality, XR) service

XR refers to all real and virtual combined environments and human-computer interactions generated by computer technologies and wearable devices. XR includes augmented reality (Augmented Reality, AR), mixed reality (Mixed Reality, MR), virtual reality (Virtual Reality, VR), and other representative forms, and their cross fields. Levels of virtuality range from partially sensory inputs to fully immersive virtual reality. One key aspect of XR is extension of human experiences especially relating to the senses of existence (represented by VR) and the acquisition of cognition (represented by AR).

For a VR service, dense small data packets are mainly transmitted in uplink (Uplink, UL), where the small data packets may carry information, such as gesture, control, or touch information, as input and reference for downlink data display; and multimedia data such as video and audio data is mainly transmitted in downlink, where the multimedia data is received and displayed in a timely manner to provide a user with immersive experience. Downlink video data is used as an example. Data packets arrive periodically or quasi-periodically. A data rate may reach tens or even hundreds of Mbps. A typical value of FPS (a frame rate) is 60 or 120. An interval between adjacent data packets is approximately 1/FPS seconds. The data usually needs to be successfully transmitted within 10 ms over an air interface, and a transmission success rate is required to be not less than 99% or even 99.9%.

For an AR service, in addition to dense small data packets, multimedia data such as video and audio data may also be transmitted in uplink. Service characteristics are similar to those in downlink. A data rate is usually low, for example, up to tens of Mbps. A time limit for transmission over an air interface may also be reduced. For example, transmission usually needs to be successfully completed within 60 ms. In addition, for an XR UL video service, data packet sizes of different frames may alternatively vary. Characteristics of downlink data transmission are basically consistent with those of the VR service.

## (2) CG PUSCH

As a low-latency and low-overhead uplink transmission solution, uplink CG PUSCH transmission mainly includes a type 1 (type 1) CG PUSCH and a type 2 (type 2) CG PUSCH. The type 1 CG PUSCH directly takes effect after radio resource control (Radio Resource Control, RRC) configuration (including a periodicity, a slot offset within a cycle, a time-frequency domain resource, and the like), without additional activation signaling. The type 2 CG PUSCH takes effect after both RRC configuration and L1 signaling (DCI) activation. The CG PUSCH is used in typical services scenarios such as ultra-reliable and low latency communications (Ultra-reliable and Low Latency Communications, URLLC). To further meet a requirement of a URLLC service for a lower latency and higher reliability, the CG PUSCH is further enhanced in NR Rel-16. The Rel-16 allows a network side to configure and activate a plurality of sets of type 1 and/or type 2 CG PUSCHs for UE.

FIG. 2 is a schematic diagram of a type 1 CG PUSCH and a type 2 CG PUSCH according to an embodiment of this application. Resources are preconfigured semi-statically over a network. When a data packet arrives, the data packet may be directly transmitted on a configured or activated CG resource.

To further improve reliability of transmission, a configured grant (configured grant) supports repetition (Repetition) of a transport block (Transport Block, TB). The number of times of repetition and a redundancy version (Redundancy version, RV) sequence corresponding to repetition are configured through RRC.

## (3) DG PUSCH skipping

Uplink pre-scheduling is supported in NR. To be specific, a base station schedules a PUSCH resource for UE in a case that the UE has not reported a buffer status report (Buffer Status Report, BSR) to request a data channel resource. After the UE obtains the uplink resource, the UE determines whether to perform transmission on the PUSCH based on whether data in a buffer needs to be transmitted. When the UE has no data to transmit, the UE may not perform transmission on the PUSCH. This is referred to as PUSCH skipping. On the base station side, the base station may perform blind detection on the PUSCH to determine whether the UE is performing transmission on the PUSCH. This mechanism can reduce a latency of uplink transmission.

(4) A PUSCH resource configured for a CG PUSCH is fixed, and an uplink CG resource with a fixed size cannot adapt to XR frames with different sizes. This leads to the following two cases:

  a. If a size of a CG PUSCH resource is greater than an actual frame size of XR traffic, a waste of resources occurs.
  b. If a size of a CG PUSCH resource is insufficient for transmitting a frame, additional dynamic scheduling is required, resulting in an additional latency.

To cope with a mismatch between a packet size and a CG PUSCH resource size, the following two existing methods may be used: (1) A DG PUSCH is supplemented for remaining data beyond the CG resource size. (2) A CG PUSCH with a larger capacity is used to cover a CG PUSCH with a smaller capacity.

For a CG PUSCH, after a frame arrives, UE knows a size of the frame and determines to transmit the frame on some or all of CG PUSCHs. If the UE performs transmission only on some of the CG PUSCHs, according to the conventional technology, a base station can only perform blind detection to determine whether the UE is using the resource, and cannot allocate a remaining resource of the UE to other UE for use. This causes a waste of some resources.

For DG PUSCH skipping, if UE has no data to transmit, a base station can only perform blind detection to determine whether the UE is using the resource, and cannot allocate a remaining resource of the UE to other UE for use. This also causes a waste of some resources.

In view of the foregoing problems, the embodiments of this application provide a solution. A terminal may notify a network-side device of whether one or more specific uplink transmission resources are releasable by reporting uplink control information (Uplink Control Information, UCI), to release a redundant uplink transmission resource, reduce a waste of resources, and improve resource utilization.

The following describes in detail an information reporting method provided in the embodiments of this application with reference to the accompanying drawings and by using some embodiments and application scenarios thereof.

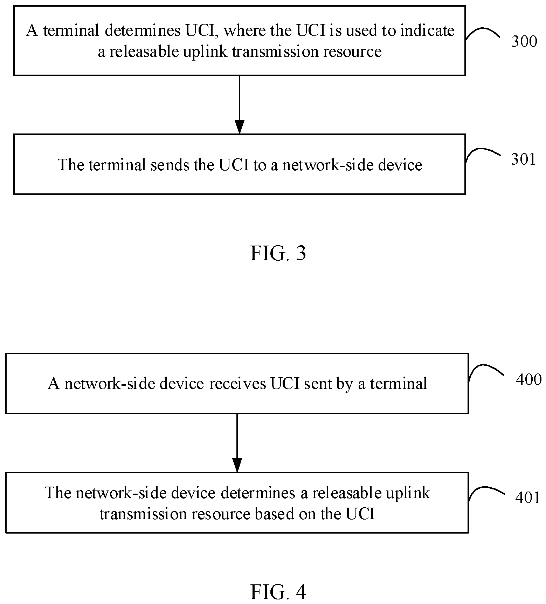

FIG. 3 is a first schematic flowchart of an information reporting method according to an embodiment of this application. As shown in FIG. 3, the method includes the following steps.

Step 300: A terminal determines UCI, where the UCI is used to indicate a releasable uplink transmission resource.

Step 301: The terminal sends the UCI to a network-side device.

Optionally, in a case that the terminal determines that an uplink transmission resource does not need to be used, the terminal may report the releasable uplink transmission resource to the network-side device by using the UCI.

For example, when the terminal is configured with one or more CG PUSCH resources and the terminal transmits data only on some CG PUSCHs, the terminal may report other unused CG PUSCHs, namely, the releasable uplink transmission resource, to the network-side device by using the UCI.

For example, when the terminal is configured with DG PUSCH skipping and the network-side device has scheduled an uplink PUSCH resource for the terminal but the terminal has no data to transmit, the terminal may report the releasable uplink transmission resource to the network-side device by using the UCI.

Optionally, that the terminal sends the UCI to the network-side device may be: sending the UCI to the network-side device in a PUSCH, or sending the UCI to the network-side device in a physical uplink control channel (Physical Uplink Control Channel, PUCCH).

Optionally, the releasable uplink transmission resource indicated by the UCI may be a releasable uplink transmission resource located after the PUSCH for transmitting the UCI, or a releasable uplink transmission resource located after the PUCCH for transmitting the UCI.

Optionally, the releasable uplink transmission resource indicated by the UCI may also be referred to as an uplink transmission resource not to be used by the terminal, a redundant or recyclable uplink transmission resource, or the like, and is mainly used to indicate that the terminal is not to perform transmission on the uplink transmission resource and the network-side device may use the resource for other purposes. It should be noted that whether the network-side device is to use the resource for other purposes depends on a decision by the network-side device.

Optionally, for a releasable uplink transmission resource reported by the terminal, the terminal cannot perform uplink transmission on the uplink transmission resource.

Optionally, for a non-releasable uplink transmission resource reported by the terminal, the terminal may perform uplink transmission on the uplink transmission resource.

Optionally, the number of bits of the UCI may be fixed, or may be determined in a predefined manner.

Optionally, for a same uplink transmission resource, the terminal needs to perform consistent indication in different UCI indications. For example, for a same uplink transmission resource, if UCI 1 indicates that the uplink transmission resource is releasable, UCI 2 cannot indicate that the uplink transmission resource is non-releasable, where the UCI 2 is UCI transmitted after or at the same time as UCI 1.

Optionally, the uplink transmission resource may include a CG PUSCH resource and/or a DG PUSCH resource.

In this embodiment of this application, the terminal may notify the network-side device of whether one or more specific uplink transmission resources are releasable by reporting the UCI, so that the network-side device may release a redundant uplink transmission resource based on the UCI reported by the terminal. This reduces a waste of resources and improves resource utilization.

Optionally, the UCI may include at least one of the following:

(1) First UCI, where the first UCI is used to indicate a releasable uplink transmission resource in a target set.

Optionally, the target set may be any uplink transmission resource set indicated by the first UCI.

Optionally, the target set may include a first CG PUSCH set or a second CG PUSCH set. The first CG PUSCH set may include a CG PUSCH configured and/or activated for the terminal. The second CG PUSCH set may be a group of CG PUSCHs determined according to a predefined rule or configured by a higher layer.

Optionally, the first CG PUSCH set may include at least one of the following: all type 1 CG PUSCHs configured for the terminal, all type 2 CG PUSCHs activated for the terminal, all type 2 CG PUSCHs configured for the terminal, and all type 1 and/or type 2 CG PUSCHs configured and/or activated for a serving cell or for all serving cells in a PUCCH group.

Optionally, a plurality of CG PUSCHs included in the second CG PUSCH set meet at least one of the following:

(1) the plurality of CG PUSCHs are associated with a same logical channel;
(2) the plurality of CG PUSCH have a same periodicity;
(3) an interval between time domain resources of the plurality of CG PUSCHs falls within a predefined range;
(4) the plurality of CG PUSCHs are associated with a same transmission configuration indicator (Transmission Configuration Indicator, TCI) state; and
(5) the plurality of CG PUSCHs have a same priority.

Optionally, the second CG PUSCH set may include at least one of the following:

(1) one or more transmission occasions (transmission occasion) corresponding to a single CG configuration (Config) (CG PUSCHs corresponding to the plurality of transmission occasions may be continuous or discontinuous in time domain); and
(2) transmission occasions corresponding to a plurality of CG configurations, where a specific CG configuration may include one or more transmission occasions corresponding to the CG configuration, and the transmission occasions may overlap in time domain (and may belong to different uplink carriers (UL Carrier) or serving cells (Serving cell) when overlapping in time domain), and may be continuous or discontinuous in time domain.

(2) Second UCI, where the second UCI is used to indicate that an uplink transmission resource within a target time range is releasable.

Optionally, the target time range may be any time range indicated by the second UCI.

For example, in a case that the terminal determines that no to-be-transmitted data remains and no uplink service channel resource (including a DG PUSCH and/or a CG PUSCH) is required for a period of time, the terminal may indicate, by using the second UCI, that at least one of a CG PUSCH or a DG PUSCH configured, activated, or scheduled for the terminal is releasable within the period of time.

Optionally, the second UCI may be used to indicate that an uplink transmission resource with a specific priority within the target time range is releasable. For example, the second UCI may be used to indicate that an uplink transmission resource with a high priority and/or an uplink transmission resource with a low priority within the target time range are releasable.

Optionally, a starting point of the target time range may be determined according to a predefined rule, or may be determined based on a starting or ending position of an uplink channel for transmitting the second UCI.

For example, the starting point of the target time range indicated by the second UCI may be the starting or ending position of the uplink channel (for example, a PUSCH or a PUCCH) for transmitting the second UCI.

For example, the starting point of the target time range indicated by the second UCI may be a time point after and with an interval of T from the starting or ending position of the uplink channel (for example, a PUSCH or a PUCCH) for transmitting the second UCI, where T may be configured by a higher layer or predefined.

Optionally, duration of the target time range may include at least one of the following:

(1) the duration of the target time range is configured by a higher layer;
(2) the duration of the target time range is reported or indicated by the terminal to the network-side device;
(3) the duration of the target time range is determined according to a predefined rule; and
(4) the duration of the target time range is associated with a service feature.

Optionally, the duration of the target time range may be absolute time duration, for example, duration in ms; or is relative duration, for example, the number of slots (slot), the number of subslots (subslot), or the number of OFDM symbols.

Optionally, the first UCI may include a bitmap, and the bitmap is used to indicate the releasable uplink transmission resource in the target set.

For example, the bitmap may indicate a releasable CG PUSCH among all configured type 1 CG PUSCHs and/or activated type 2 CG PUSCHs.

For example, the bitmap may indicate a releasable CG PUSCH in the first CG PUSCH set or the second CG PUSCH set.

Optionally, the first UCI may include a bitmap, and the bitmap is used to indicate an index of a releasable CG PUSCH configuration in the target set.

For example, the bitmap may indicate an index of a releasable CG PUSCH configuration among all configured type 1 CG PUSCHs and/or activated type 2 CG PUSCHs.

For example, the bitmap may indicate an index of a releasable CG PUSCH configuration in the first CG PUSCH set or the second CG PUSCH set.

Optionally, a length of the bitmap may be determined based on the number of PUSCH configurations or PUSCH transmission occasions in the target set, or determined based on the total number of transmission occasions of all PUSCHs in the target set within one cycle.

For example, the length of the bitmap may be equal to the number of PUSCH configurations or PUSCH transmission occasions in the target set.

For example, the length of the bitmap may be equal to the number of PUSCH configurations or PUSCH transmission occasions in the target set minus 1.

For example, the length of the bitmap may be equal to the total number of transmission occasions of all PUSCHs in the target set within one cycle.

For example, the length of the bitmap may be equal to the total number of transmission occasions of all PUSCHs in the target set within one cycle minus 1.

Optionally, the first UCI may indicate a number of a releasable PUSCH transmission occasion in the target set.

Optionally, the first UCI may indicate a releasable initial PUSCH transmission occasion and the number of consecutive releasable PUSCH transmission occasions.

For example, PUSCH transmission occasions in the second PUSCH set are numbered 0, 1, 2, and so on. The terminal determines that five PUSCH transmission occasions numbered 2, 3, 4, 5, and 6 are releasable. The terminal may indicate the numbers of the five releasable PUSCH transmission occasions by using the first UCI; or the terminal may indicate that the PUSCH transmission occasion numbered 2 is a releasable initial PUSCH transmission occasion, and indicate that a total of five consecutive PUSCH transmission occasions are releasable, so that the network-side device can determine the releasable PUSCH transmission occasions based on the indication by the first UCI.

Optionally, that the UCI is transmitted in a PUSCH may mean that the UCI is transmitted in each CG PUSCH actually used for transmission. For example, the UCI is transmitted in a CG/DG PUSCH, and may be used to indicate that an uplink transmission resource within a specific time range after the CG/DG PUSCH for transmitting the UCI is releasable, or may be used to indicate that one or more specific uplink transmission resources after the CG/DG PUSCH for transmitting the UCI are releasable.

Optionally, that the UCI is transmitted in a PUSCH may mean that the UCI is transmitted in the first N CG PUSCHs in the second CG PUSCH set, where N may be determined according to a predefined rule or configured by higher layer signaling.

Optionally, the UCI is transmitted in a PUCCH, and may be used to indicate that an uplink transmission resource within a specific time range after the PUCCH for transmitting the UCI is releasable, or may be used to indicate that one or more specific uplink transmission resources after the PUCCH for transmitting the UCI are releasable.

Optionally, the second CG PUSCH set indicated by the first UCI may include at least one of the following:

(1) A second CG PUSCH set to which a CG PUSCH for transmitting the first UCI belongs.

For example, the first UCI is transmitted in a PUSCH actually used for transmission in a second CG PUSCH set, and may be used to indicate a releasable uplink transmission resource in the second CG PUSCH set.

Optionally, the first UCI is transmitted in the 1st or the first N PUSCHs used for transmission in a second CG PUSCH set, and may indicate whether a redundant CG PUSCH (to be specific, a PUSCH located after the 1st or the first N PUSCHs used for transmission in the second CG PUSCH set) exists at the end of the second CG PUSCH set, a time domain position of the redundant CG PUSCH if the redundant CG PUSCH exists, and the like.

(2) A second CG PUSCH set located after the second CG PUSCH set to which the CG PUSCH for transmitting the first UCI belongs.

For example, the first UCI is transmitted in a PUSCH actually used for transmission in a second CG PUSCH set, and may indicate a releasable uplink transmission resource in another second CG PUSCH set determined in a predefined manner, or optionally, may indicate whether a redundant CG PUSCH exists at the end of the second CG PUSCH set indicated by the first UCI, a time domain position of the redundant CG PUSCH if the redundant CG PUSCH exists, and the like. The another second CG PUSCH set determined in the predefined manner may be one or more specific second CG PUSCH sets located after the second CG PUSCH set for transmitting the UCI, for example, may be a next second CG PUSCH set of the second CG PUSCH set for transmitting the UCI.

(3) A second CG PUSCH set corresponding to a PUCCH for transmitting the first UCI.

For example, the first UCI is transmitted in a PUCCH, where the PUCCH for transmitting the first UCI is a PUCCH corresponding to a second CG PUSCH set, and the first UCI may be used to indicate information about a redundant CG PUSCH in the second CG PUSCH set.

Optionally, the PUCCH for transmitting the first UCI may be a PUCCH used for transmission before the second CG PUSCH set indicated by the first UCI.

Optionally, a current PUCCH for transmitting the first UCI may be a PUCCH located before the 1st CG PUSCH expected to be actually used for transmission.

Optionally, a current PUCCH for transmitting the first UCI may be a PUCCH located before an end moment of the last CG PUSCH expected to be actually used for transmission.

Optionally, the PUCCH corresponding to the second CG PUSCH set may be a PUCCH that is associated with the second CG PUSCH set and that is configured by a higher layer.

Optionally, a manner of configuring or determining the PUCCH corresponding to the second CG PUSCH set may include at least one of the following:

(1) The network side configures a PUCCH resource corresponding to the second CG PUSCH set.

Optionally, a time domain position of the PUCCH resource meets a relative relationship between the PUCCH and the second CG PUSCH set.

For example, the time domain position of the PUCCH resource is before the second CG PUSCH set.

For example, the time domain position of the PUCCH resource is before the 1st CG PUSCH expected to be actually used for transmission.

For example, the time domain position of the PUCCH resource is before an end moment of the last CG PUSCH expected to be actually used for transmission.

(2) The terminal side is preconfigured with or pre-applies for a PUCCH resource corresponding to the second CG PUSCH set.

(3) A time-frequency resource position of the PUCCH corresponding to the second CG PUSCH set is predefined according to a specific rule.

For example, a time-frequency resource that is located before and has an interval of X time units (slots, symbols, or the like) from the 1st or any PUSCH actually used for transmission in a second CG PUSCH set is a starting or ending position of a PUCCH resource corresponding to the second CG PUSCH set, where X may be predefined or configured by a higher layer, and remaining parameters related to PUCCH configuration may be configured by the network side.

For example, a position with an interval of Y ms from the end of the last CG PUSCH in a previous second CG PUSCH set is a starting or ending position of a PUCCH resource corresponding to a next second CG PUSCH set, where $Y \geq 0$, and Y may be predefined or configured by a higher layer.

For example, an ending position of the last second CG PUSCH set among a plurality of second CG PUSCH sets within a previous period of time is a starting or ending position of a PUCCH resource corresponding to a second CG PUSCH set within a next period of time.

FIG. 4 is a second schematic flowchart of an information reporting method according to an embodiment of this application. As shown in FIG. 4, the method includes the following steps.

Step 400: A network-side device receives UCI sent by a terminal.

Step 401: The network-side device determines a releasable uplink transmission resource based on the UCI.

Optionally, in a case that the terminal determines that an uplink transmission resource does not need to be used, the terminal may report the releasable uplink transmission resource to the network-side device by using the UCI. Correspondingly, after receiving the UCI sent by the terminal, the network-side device may determine the releasable uplink transmission resource based on the UCI.

For example, when the terminal is configured with one or more CG PUSCH resources and the terminal transmits data only on some CG PUSCHs, the terminal may report other unused CG PUSCHs, namely, the releasable uplink transmission resource, to the network-side device by using the UCI.

For example, when the terminal is configured with DG PUSCH skipping and the network-side device has scheduled an uplink PUSCH resource for the terminal but the terminal has no data to transmit, the terminal may report the releasable uplink transmission resource to the network-side device by using the UCI.

Optionally, that the network-side device receives the UCI sent by the terminal may be: receiving UCI sent by the terminal in a PUSCH, or receiving UCI sent by the terminal in a PUCCH.

Optionally, the releasable uplink transmission resource indicated by the UCI may be a releasable uplink transmission resource located after the PUSCH for transmitting the UCI, or a releasable uplink transmission resource located after the PUCCH for transmitting the UCI.

Optionally, the uplink transmission resource may include a CG PUSCH resource and/or a DG PUSCH resource.

In this embodiment of this application, the network-side device may receive the UCI reported by the terminal, where the UCI is used to notify the network-side device of whether one or more specific uplink transmission resources are releasable, so that the network-side device may release a redundant uplink transmission resource based on the UCI reported by the terminal. This reduces a waste of resources and improves resource utilization.

Optionally, the UCI may include at least one of the following:

(1) First UCI, where the first UCI is used to indicate a releasable uplink transmission resource in a target set.

Optionally, the target set may be any uplink transmission resource set indicated by the first UCI.

Optionally, the target set may include a first CG PUSCH set or a second CG PUSCH set. The first CG PUSCH set may include a CG PUSCH configured and/or activated for the terminal. The second CG PUSCH set may be a group of CG PUSCHs determined according to a predefined rule or configured by a higher layer.

Optionally, the first CG PUSCH set may include at least one of the following: all type 1 CG PUSCHs configured for the terminal, all type 2 CG PUSCHs activated for the terminal, all type 2 CG PUSCHs configured for the terminal, and all type 1 and/or type 2 CG PUSCHs configured and/or activated for a serving cell or for all serving cells in a PUCCH group.

Optionally, a plurality of CG PUSCHs included in the second CG PUSCH set meet at least one of the following:

(1) the plurality of CG PUSCHs are associated with a same logical channel;
(2) the plurality of CG PUSCH have a same periodicity;
(3) an interval between time domain resources of the plurality of CG PUSCHs falls within a predefined range;
(4) the plurality of CG PUSCHs are associated with a same transmission configuration indicator (Transmission Configuration Indicator, TCI) state; and
(5) the plurality of CG PUSCHs have a same priority.

Optionally, the second CG PUSCH set may include at least one of the following:

(1) one or more transmission occasions (transmission occasion) corresponding to a single CG configuration (Config) (CG PUSCHs corresponding to the plurality of transmission occasions may be continuous or discontinuous in time domain); and
(2) transmission occasions corresponding to a plurality of CG configurations, where a specific CG configuration may include one or more transmission occasions corresponding to the CG configuration, and the transmission occasions may overlap in time domain (and may belong to different uplink carriers (UL Carrier) or serving cells (Serving cell) when overlapping in time domain), and may be continuous or discontinuous in time domain.

(2) Second UCI, where the second UCI is used to indicate that an uplink transmission resource within a target time range is releasable.

Optionally, the target time range may be any time range indicated by the second UCI.

For example, in a case that the terminal determines that no to-be-transmitted data remains and no uplink service channel resource (including a DG PUSCH and/or a CG PUSCH) is required for a period of time, the terminal may indicate, by using the second UCI, that at least one of a CG PUSCH or a DG PUSCH configured, activated, or scheduled for the terminal is releasable within the period of time. After receiving the second UCI, the network-side device may release an uplink transmission resource within the period of time indicated by the second UCI.

Optionally, the second UCI may be used to indicate that an uplink transmission resource with a specific priority within the target time range is releasable. For example, the second UCI may be used to indicate that an uplink transmission resource with a high priority and/or an uplink transmission resource with a low priority within the target time range are releasable. After receiving the second UCI, the network-side device may release the uplink transmission resource with the specific priority within the target time range indicated by the second UCI.

Optionally, a starting point of the target time range may be determined according to a predefined rule, or may be determined based on a starting or ending position of an uplink channel for transmitting the second UCI.

For example, the starting point of the target time range indicated by the second UCI may be the starting or ending position of the uplink channel (for example, a PUSCH or a PUCCH) for transmitting the second UCI.

For example, the starting point of the target time range indicated by the second UCI may be a time point after and with an interval of T from the starting or ending position of the uplink channel (for example, a PUSCH or a PUCCH) for transmitting the second UCI, where T may be configured by a higher layer or predefined.

Optionally, duration of the target time range may include at least one of the following:

(1) the duration of the target time range is configured by a higher layer;
(2) the duration of the target time range is reported or indicated by the terminal to the network-side device;
(3) the duration of the target time range is determined according to a predefined rule; and
(4) the duration of the target time range is associated with a service feature.

Optionally, the duration of the target time range may be absolute time duration, for example, duration in ms; or is relative duration, for example, the number of slots (slot), the number of subslots (subslot), or the number of OFDM symbols.

Optionally, the first UCI may include a bitmap, and the bitmap is used to indicate the releasable uplink transmission resource in the target set. After receiving the first UCI, the network-side device may determine one or more releasable uplink transmission resources based on the bitmap included in the first UCI.

For example, the bitmap may indicate a releasable CG PUSCH among all configured type 1 CG PUSCHs and/or activated type 2 CG PUSCHs.

For example, the bitmap may indicate a releasable CG PUSCH in the first CG PUSCH set or the second CG PUSCH set.

Optionally, the first UCI may include a bitmap, and the bitmap is used to indicate an index of a releasable CG PUSCH configuration in the target set.

For example, the bitmap may indicate an index of a releasable CG PUSCH configuration among all configured type 1 CG PUSCHs and/or activated type 2 CG PUSCHs.

For example, the bitmap may indicate an index of a releasable CG PUSCH configuration in the first CG PUSCH set or the second CG PUSCH set.

Optionally, a length of the bitmap may be determined based on the number of PUSCH configurations or PUSCH transmission occasions in the target set, or determined based on the total number of transmission occasions of all PUSCHs in the target set within one cycle.

For example, the length of the bitmap may be equal to the number of PUSCH configurations or PUSCH transmission occasions in the target set.

For example, the length of the bitmap may be equal to the number of PUSCH configurations or PUSCH transmission occasions in the target set minus 1.

For example, the length of the bitmap may be equal to the total number of transmission occasions of all PUSCHs in the target set within one cycle.

For example, the length of the bitmap may be equal to the total number of transmission occasions of all PUSCHs in the target set within one cycle minus 1.

Optionally, the first UCI may indicate a number of a releasable PUSCH transmission occasion in the target set.

Optionally, the first UCI may indicate a releasable initial PUSCH transmission occasion and the number of consecutive releasable PUSCH transmission occasions.

For example, PUSCH transmission occasions in the second PUSCH set are numbered 0, 1, 2, and so on. The terminal determines that five PUSCH transmission occasions numbered 2, 3, 4, 5, and 6 are releasable. The terminal may indicate the numbers of the five releasable PUSCH transmission occasions by using the first UCI; or the terminal may indicate that the PUSCH transmission occasion numbered 2 is a releasable initial PUSCH transmission occasion, and indicate that a total of five consecutive PUSCH transmission occasions are releasable, so that the network-side device can determine the releasable PUSCH transmission occasions based on the indication by the first UCI.

Optionally, that the UCI is transmitted in a PUSCH may mean that the UCI is transmitted in each CG PUSCH actually used for transmission. For example, the UCI is transmitted in a CG/DG PUSCH, and may be used to indicate that an uplink transmission resource within a specific time range after the CG/DG PUSCH for transmitting the UCI is releasable, or may be used to indicate that one or more specific uplink transmission resources after the CG/DG PUSCH for transmitting the UCI are releasable. After receiving the UCI, the network-side device may determine one or more releasable uplink transmission resources based on the PUSCH for transmitting the UCI.

Optionally, that the UCI is transmitted in a PUSCH may mean that the UCI is transmitted in the first N CG PUSCHs in the second CG PUSCH set, where N may be determined according to a predefined rule or configured by higher layer signaling.

Optionally, the UCI is transmitted in a PUCCH, and may be used to indicate that an uplink transmission resource within a specific time range after the PUCCH for transmitting the UCI is releasable, or may be used to indicate that one or more specific uplink transmission resources after the PUCCH for transmitting the UCI are releasable. After receiving the UCI, the network-side device may determine one or more releasable uplink transmission resources based on the PUCCH for transmitting the UCI.

Optionally, the second CG PUSCH set indicated by the first UCI may include at least one of the following:

(1) A second CG PUSCH set to which a CG PUSCH for transmitting the first UCI belongs.

For example, the first UCI is transmitted in a PUSCH actually used for transmission in a second CG PUSCH set, and may be used to indicate a releasable uplink transmission resource in the second CG PUSCH set.

Optionally, the first UCI is transmitted in the 1st or the first N PUSCHs used for transmission in a second CG PUSCH set, and may indicate whether a redundant CG PUSCH (to be specific, a PUSCH located after the 1st or the first N PUSCHs used for transmission in the second CG PUSCH set) exists at the end of the second CG PUSCH set, a time domain position of the redundant CG PUSCH if the redundant CG PUSCH exists, and the like.

(2) A second CG PUSCH set located after the second CG PUSCH set to which the CG PUSCH for transmitting the first UCI belongs.

For example, the first UCI is transmitted in a PUSCH actually used for transmission in a second CG PUSCH set, and may indicate a releasable uplink transmission resource in another second CG PUSCH set determined in a predefined manner, or optionally, may indicate whether a redundant CG PUSCH exists at the end of the second CG PUSCH set indicated by the first UCI, a time domain position of the redundant CG PUSCH if the redundant CG PUSCH exists, and the like. The another second CG PUSCH set determined in the predefined manner may be one or more specific second CG PUSCH sets located after the second CG PUSCH set for transmitting the UCI, for example, may be a next second CG PUSCH set of the second CG PUSCH set for transmitting the UCI.

(3) A second CG PUSCH set corresponding to a PUCCH for transmitting the first UCI.

For example, the first UCI is transmitted in a PUCCH, where the PUCCH for transmitting the first UCI is a PUCCH corresponding to a second CG PUSCH set, and the first UCI may be used to indicate information about a redundant CG PUSCH in the second CG PUSCH set.

Optionally, the PUCCH for transmitting the first UCI may be a PUCCH used for transmission before the second CG PUSCH set indicated by the first UCI.

Optionally, a current PUCCH for transmitting the first UCI may be a PUCCH located before the 1st CG PUSCH expected to be actually used for transmission.

Optionally, a current PUCCH for transmitting the first UCI may be a PUCCH located before an end moment of the last CG PUSCH expected to be actually used for transmission.

Optionally, the PUCCH corresponding to the second CG PUSCH set may be a PUCCH that is associated with the second CG PUSCH set and that is configured by a higher layer.

Optionally, a manner of configuring or determining the PUCCH corresponding to the second CG PUSCH set may include at least one of the following:

(1) The network side configures a PUCCH resource corresponding to the second CG PUSCH set.

Optionally, a time domain position of the PUCCH resource meets a relative relationship between the PUCCH and the second CG PUSCH set.

For example, the time domain position of the PUCCH resource is before the second CG PUSCH set.

For example, the time domain position of the PUCCH resource is before the 1st CG PUSCH expected to be actually used for transmission.

For example, the time domain position of the PUCCH resource is before an end moment of the last CG PUSCH expected to be actually used for transmission.

(2) The terminal side is preconfigured with or pre-applies for a PUCCH resource corresponding to the second CG PUSCH set.

(3) A time-frequency resource position of the PUCCH corresponding to the second CG PUSCH set is predefined according to a specific rule.

For example, a time-frequency resource that is located before and has an interval of X time units (slots, symbols, or the like) from the 1st or any PUSCH actually used for transmission in a second CG PUSCH set is a starting or ending position of a PUCCH resource corresponding to the second CG PUSCH set, where X may be predefined or configured by a higher layer, and remaining parameters related to PUCCH configuration may be configured by the network side.

For example, a position with an interval of Y ms from the end of the last CG PUSCH in a previous second CG PUSCH set is a starting or ending position of a PUCCH resource corresponding to a next second CG PUSCH set, where $Y \geq 0$, and Y may be predefined or configured by a higher layer.

For example, an ending position of the last second CG PUSCH set among a plurality of second CG PUSCH sets within a previous period of time is a starting or ending position of a PUCCH resource corresponding to a second CG PUSCH set within a next period of time.

The methods provided in the embodiments of this application are based on a same concept of this application. Therefore, mutual reference may be made between implementations of the methods, and repeated descriptions are omitted.

The methods provided in the embodiments of this application are described below by using embodiments of specific application scenarios as examples.

Embodiment 1:

UE is configured with M CG PUSCHs, where numbers/configuration indexes of the M CG PUSCHs are $M_0$, $M_1$, ..., and $M_i$ respectively, and i is an integer less than M. The numbers of transmission occasions of the CG PUSCHs within one cycle are $N_0$, $N_1$, ..., and $N_i$ respectively.

When the UE reports a releasable uplink transmission resource by using UCI, the UCI may include M or M-1 bits to indicate a releasable CG PUSCH, where a PUSCH resource indicated by the M or M-1 bits should be a CG PUSCH resource located after a resource for transmitting the UCI.

Because the UCI includes only M or M-1 bits, the UCI can perform indication only at a CG PUSCH configuration level, and cannot indicate each PUSCH transmission occasion in a CG PUSCH. Therefore, when the UE uses only some of PUSCH transmission occasions in a CG PUSCH configuration, the UE still needs to indicate that the CG PUSCH configuration is in use, to prevent a network-side device from allocating some in-use resources in the CG PUSCH to other UE. Therefore, there are still some CG PUSCH resources that cannot be recycled by the network-side device. In view of this, when the UE reports the releasable uplink transmission resource by using the UCI, the UCI may include $\sum_{i=0}^{M-1} N_i$ or $\sum_{i=0}^{M-1} N_i - 1$ bits to indicate the releasable uplink transmission resource, so that the UE can indicate whether all transmission occasions of all CG PUSCH configurations are releasable (-1 is intended to exclude a current CG PUSCH transmission occasion for transmitting the UCI).

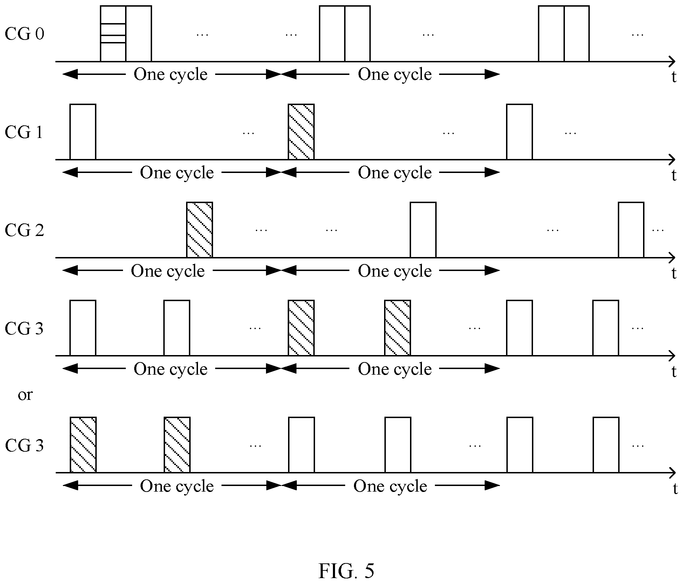

In addition, because transmission in a CG PUSCH is periodic, the foregoing includes only an indication within one cycle. When the UCI includes M or M-1 bits, the UCI is used to indicate whether a CG PUSCH resource whose time domain position is within one cycle after a current CG PUSCH is releasable, or indicate $N_i$ transmission occasions whose configuration indexes are $M_i$ and that are located after the current CG PUSCH. FIG. 5 is a first schematic diagram of an implementation of an information reporting method according to an embodiment of this application. As shown in FIG. 5, a total of four CG PUSCHs, namely, a CG 0 to a CG 3, are configured and activated for UE. The four CG PUSCHs have a same periodicity, and have different intra-cycle offsets and different PUSCH transmission occasions within one cycle. The CG 0 and the CG 3 each include two transmission occasions within one cycle. The CG 1 and the CG 2 each include one transmission occasion within one cycle. When a service frame arrives and the UE determines to perform transmission on the 1st transmission occasion of the CG 0 (the UE may also perform transmission on the 2nd transmission occasion), the UE may use three bits to indicate whether to use transmission resources of the three CG PUSCHs other than the CG 0. A part filled with a horizontal stripe pattern in the figure indicates UCI transmitted in a PUSCH of the CG 0. A part filled with a diagonal stripe pattern in the figure indicates a CG PUSCH resource indicated by the UCI, where the UCI indicates whether the CG PUSCH resource is releasable.

In FIG. 5, the 1st transmission occasion of the CG 3 within the 1st cycle in the figure is located before a transmission occasion for transmitting the UCI. In this case, the UCI may perform indication in two manners.

Manner 1: In the 1st case of the CG 3 in the figure, the UCI may indicate whether a PUSCH resource of the CG 3 within a next cycle is releasable.

Manner 2: In the 2nd case of the CG 3 in the figure, the UCI may indicate whether a PUSCH resource of the CG 3 within a current cycle is releasable. In this case, when the UCI indicates that the PUSCH resource of the CG 3 is releasable, it may indicate that a transmission occasion of the CG 3 that is located after a transmission occasion for transmitting the UCI is releasable. In this embodiment, it indicates that the 2nd transmission occasion of the CG 3 within the 1st cycle in FIG. 5 is releasable. To be specific, if a PUSCH has at least one PUSCH transmission occasion located after the transmission occasion for transmitting the UCI within the current cycle, the UCI may indicate whether a resource of the PUSCH within the current cycle is releasable. If some transmission occasions of the PUSCH are located before the transmission occasion for transmitting the UCI within the current cycle, the UCI may indicate not to release the transmission occasions located before the transmission occasion for transmitting the UCI.

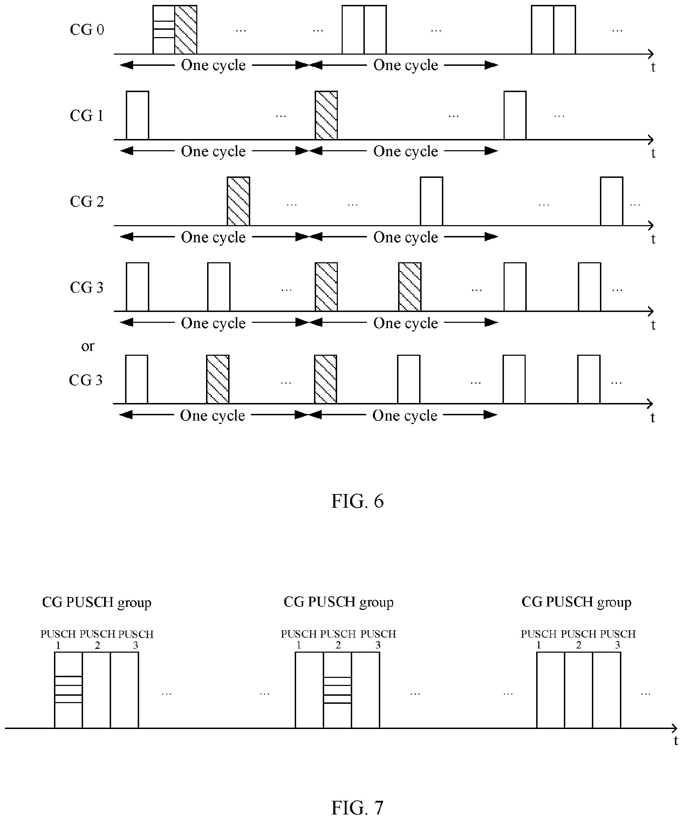

FIG. 6 is a second schematic diagram of an implementation of an information reporting method according to an embodiment of this application. As shown in FIG. 6, a part filled with a horizontal stripe pattern in the figure indicates UCI transmitted on a PUSCH transmission occasion of a CG 0, and a part filled with a diagonal stripe pattern in the figure indicates a resource of a CG PUSCH transmission occasion indicated by the UCI, where the UCI indicates whether the resource is releasable. When the UCI includes $\sum_{i=0}^{M-1} N_i - 1$ bits, namely, 5 bits, the UCI may indicate whether the resource of the CG PUSCH transmission occasion marked in the figure is releasable. If the UCI indicates that the resource is releasable, a network-side device may allocate the resource to other UE.

In FIG. 6, the UCI may indicate a resource of a releasable CG PUSCH transmission occasion located after the PUSCH transmission occasion for transmitting the UCI (as shown in the 2nd case of the CG 3 in FIG. 6), or may indicate a resource of a releasable CG PUSCH transmission occasion within a next cycle after the PUSCH transmission occasion for transmitting the UCI (as shown in the 1st case of the CG 3 in FIG. 6).

Embodiment 2:

FIG. 7 is a third schematic diagram of an implementation of an information reporting method according to an embodiment of this application. As shown in FIG. 7, a part filled with a horizontal stripe pattern in the figure indicates UCI transmitted in a PUSCH. In the figure, PUSCHs 1 to 3 are a CG PUSCH group (namely, the second CG PUSCH set in this application). In the 1st CG PUSCH group, when a service frame arrives, UE performs transmission in the PUSCH 1, and no service transmission is performed in the PUSCH 2 or 3. In this case, the UE may indicate, to a network-side device, that the PUSCH 2 and the PUSCH 3 are releasable. In the 2nd CG PUSCH group, the UE transmits service data in the PUSCH 2, and the PUSCH 1 and the PUSCH 3 have no service data. In this case, the UE may indicate, to the network-side device, that the PUSCH 3 (and the PUSCH 1) is releasable.

The information reporting method provided in the embodiments of this application may be performed by an information reporting apparatus. In the embodiments of this application, an information reporting apparatus provided in the embodiments of this application is described by using an example in which the information reporting apparatus performs the information reporting method.

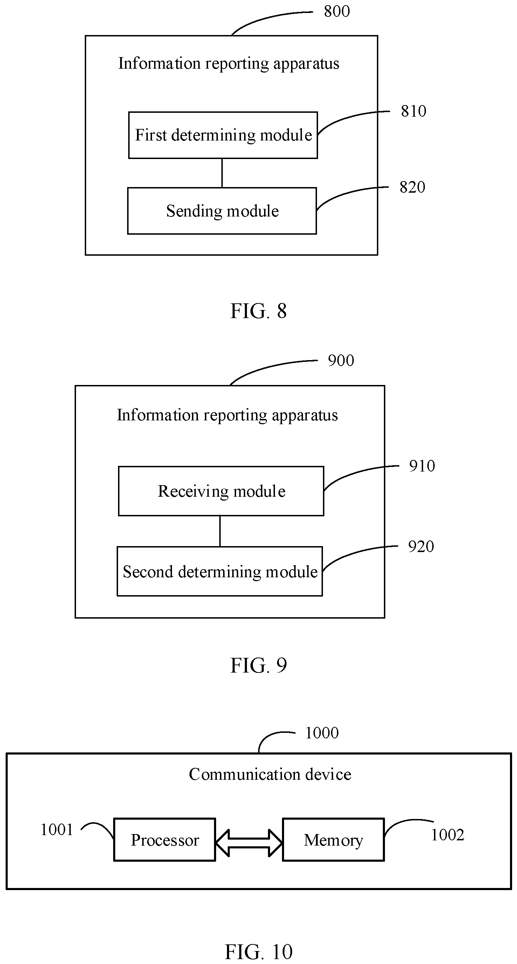

FIG. 8 is a first schematic structural diagram of an information reporting apparatus according to an embodiment of this application. As shown in FIG. 8, an embodiment of this application provides an information reporting apparatus 800, which may be applied to a terminal and includes:

a first determining module 810, configured to determine UCI, where the UCI is used to indicate a releasable uplink transmission resource; and
a sending module 820, configured to send the UCI to a network-side device.

Optionally, the UCI includes at least one of the following:

first UCI, where the first UCI is used to indicate a releasable uplink transmission resource in a target set; and
second UCI, where the second UCI is used to indicate that an uplink transmission resource within a target time range is releasable.

Optionally, the target set includes a first CG PUSCH set or a second CG PUSCH set; and
the first CG PUSCH set includes a CG PUSCH configured and/or activated for the terminal, and the second CG PUSCH set is a group of CG PUSCHs determined according to a predefined rule or configured by a higher layer.

Optionally, a starting point of the target time range is determined according to a predefined rule, or is determined based on a starting or ending position of an uplink channel for transmitting the second UCI; and
duration of the target time range includes at least one of the following:

the duration of the target time range is configured by a higher layer;
the duration of the target time range is reported or indicated by the terminal to the network-side device;
the duration of the target time range is determined according to a predefined rule; and
the duration of the target time range is associated with a service feature.

Optionally, the first UCI includes a bitmap, and the bitmap is used to indicate the releasable uplink transmission resource in the target set; or

the bitmap is used to indicate an index of a releasable CG PUSCH configuration in the target set; or
the first UCI indicates a number of a releasable PUSCH transmission occasion in the target set; or
the first UCI indicates a releasable initial PUSCH transmission occasion and the number of consecutive releasable PUSCH transmission occasions.

Optionally, a length of the bitmap is determined based on the number of PUSCH configurations or PUSCH transmission occasions in the target set, or is determined based on the total number of transmission occasions of all PUSCHs in the target set within one cycle.

Optionally, a plurality of CG PUSCHs included in the second CG PUSCH set meet at least one of the following:

the plurality of CG PUSCHs are associated with a same logical channel;
the plurality of CG PUSCH have a same periodicity;
an interval between time domain resources of the plurality of CG PUSCHs falls within a predefined range;
the plurality of CG PUSCHs are associated with a same TCI state; and
the plurality of CG PUSCHs have a same priority.

Optionally, the second CG PUSCH set indicated by the first UCI includes at least one of the following:

a second CG PUSCH set to which a CG PUSCH for transmitting the first UCI belongs;
a second CG PUSCH set located after the second CG PUSCH set to which the CG PUSCH for transmitting the first UCI belongs; and
a second CG PUSCH set corresponding to a PUCCH for transmitting the first UCI.

Optionally, the uplink transmission resource includes a CG PUSCH resource and/or a DG PUSCH resource.

In this embodiment of this application, the terminal may notify the network-side device of whether one or more specific uplink transmission resources are releasable by reporting the UCI, so that the network-side device may release a redundant uplink transmission resource based on the UCI reported by the terminal. This reduces a waste of resources and improves resource utilization.

FIG. 9 is a second schematic structural diagram of an information reporting apparatus according to an embodiment of this application. As shown in FIG. 9, an embodiment of this application provides an information reporting apparatus 900, which may be applied to a network-side device and includes:

a receiving module 910, configured to receive UCI sent by a terminal; and
a second determining module 920, configured to determine a releasable uplink transmission resource based on the UCI.

Optionally, the UCI includes at least one of the following:

first UCI, where the first UCI is used to indicate a releasable uplink transmission resource in a target set; and

second UCI, where the second UCI is used to indicate that an uplink transmission resource within a target time range is releasable.

Optionally, the target set includes a first CG PUSCH set or a second CG PUSCH set; and
the first CG PUSCH set includes a CG PUSCH configured and/or activated for the terminal, and the second CG PUSCH set is a group of CG PUSCHs determined according to a predefined rule or configured by a higher layer.

Optionally, a starting point of the target time range is determined according to a predefined rule, or is determined based on a starting or ending position of an uplink channel for transmitting the second UCI; and duration of the target time range includes at least one of the following:

the duration of the target time range is configured by a higher layer;
the duration of the target time range is reported or indicated by the terminal to the network-side device;
the duration of the target time range is determined according to a predefined rule; and
the duration of the target time range is associated with a service feature.

Optionally, the first UCI includes a bitmap, and the bitmap is used to indicate the releasable uplink transmission resource in the target set; or

the bitmap is used to indicate an index of a releasable CG PUSCH configuration in the target set; or
the first UCI indicates a number of a releasable PUSCH transmission occasion in the target set; or
the first UCI indicates a releasable initial PUSCH transmission occasion and the number of consecutive releasable PUSCH transmission occasions.

Optionally, a length of the bitmap is determined based on the number of PUSCH configurations or PUSCH transmission occasions in the target set, or is determined based on the total number of transmission occasions of all PUSCHs in the target set within one cycle.

Optionally, a plurality of CG PUSCHs included in the second CG PUSCH set meet at least one of the following:

the plurality of CG PUSCHs are associated with a same logical channel;
the plurality of CG PUSCH have a same periodicity;
an interval between time domain resources of the plurality of CG PUSCHs falls within a predefined range;
the plurality of CG PUSCHs are associated with a same TCI state; and
the plurality of CG PUSCHs have a same priority.

Optionally, the second CG PUSCH set indicated by the first UCI includes at least one of the following:

> a second CG PUSCH set to which a CG PUSCH for transmitting the first UCI belongs;
> a second CG PUSCH set located after the second CG PUSCH set to which the CG PUSCH for transmitting the first UCI belongs; and
> a second CG PUSCH set corresponding to a PUCCH for transmitting the first UCI.

Optionally, the uplink transmission resource includes a CG PUSCH resource and/or a DG PUSCH resource.

In this embodiment of this application, the network-side device may receive the UCI reported by the terminal, where the UCI is used to notify the network-side device of whether one or more specific uplink transmission resources are releasable, so that the network-side device may release a redundant uplink transmission resource based on the UCI reported by the terminal. This reduces a waste of resources and improves resource utilization.

The information reporting apparatus in the embodiments of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in the embodiments of this application.

The information reporting apparatus in the embodiments of this application may be an apparatus with an operating system. The operating system may be an Android (Android) operating system, an iOS operating system, or another possible operating system. This is not specifically limited in the embodiments of this application.

The information reporting apparatus provided in the embodiments of this application is capable of implementing the processes implemented in the foregoing method embodiments, with the same technical effect achieved. To avoid repetition, details are not described herein again.

FIG. 10 is a schematic structural diagram of a communication device according to an embodiment of this application. As shown in FIG. 10, an embodiment of this application further provides a communication device 1000, including a processor 1001 and a memory 1002. The memory 1002 stores a program or instructions capable of running on the processor 1001. For example, in a case that the communication device 1000 is a terminal, when the program or instructions are executed by the processor 1001, the steps in the foregoing embodiments of the information reporting method corresponding to a terminal are implemented, with the same technical effect achieved. In a case that the communication device 1000 is a network-side device, when the program or instructions are executed by the processor 1001, the steps in the foregoing embodiments of the information reporting method corresponding to a network-side device are implemented, with the same technical effect achieved. To avoid repetition, details are not described herein again.

An embodiment of this application further provides a terminal, including a processor and a communication interface. The processor is configured to determine UCI, where the UCI is used to indicate a releasable uplink transmission resource. The communication interface is configured to send the UCI to a network-side device.

The terminal embodiment corresponds to the foregoing terminal-side method embodiment, and all implementation processes and implementations of the foregoing method embodiment are applicable to the terminal embodiment, with the same technical effect achieved.

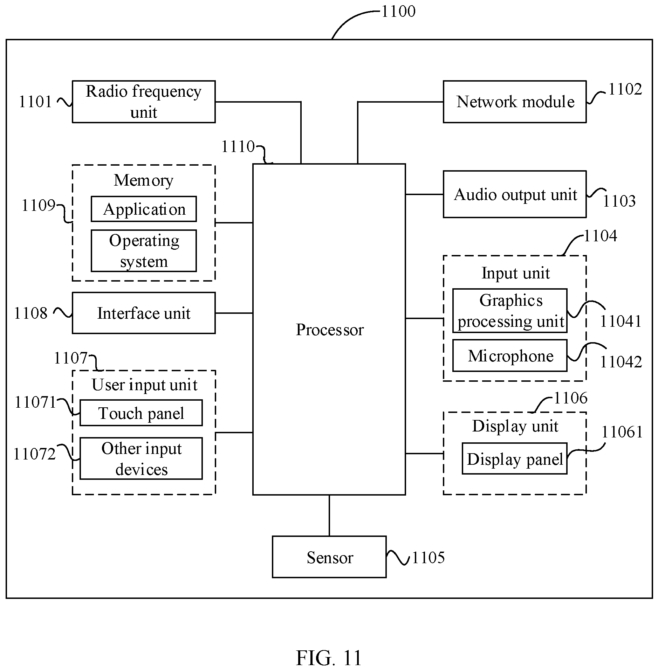

Specifically, FIG. 11 is a schematic diagram of a hardware structure of a terminal according to an embodiment of this application. The terminal 1100 includes but is not limited to at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (for example, a battery) that supplies power to each component. The power supply may be logically connected to the processor 1110 through a power management system, so that functions such as charging management, discharging management, and power consumption management are implemented through the power management system. The terminal structure shown in FIG. 11 does not constitute a limitation on the terminal. The terminal may include more or fewer components than those shown in the figure, or some components may be combined, or different component arrangements may be used. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or an on/off button), a trackball, a mouse, and a joystick. Details are not described herein.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may mainly include a first storage region for storing a program or instructions and a second storage region for storing data. The first storage region may store an operating system, an application or instructions required by at least one function (for example, an audio play function or an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 1110.

The processor 1110 is configured to determine UCI, where the UCI is used to indicate a releasable uplink transmission resource.

The radio frequency unit 1101 is configured to send the UCI to a network-side device.

Optionally, the UCI includes at least one of the following:

first UCI, where the first UCI is used to indicate a releasable uplink transmission resource in a target set; and
second UCI, where the second UCI is used to indicate that an uplink transmission resource within a target time range is releasable.

Optionally, the target set includes a first CG PUSCH set or a second CG PUSCH set; and
the first CG PUSCH set includes a CG PUSCH configured and/or activated for the terminal, and the second CG PUSCH set is a group of CG PUSCHs determined according to a predefined rule or configured by a higher layer.

Optionally, a starting point of the target time range is determined according to a predefined rule, or is determined based on a starting or ending position of an uplink channel for transmitting the second UCI; and
duration of the target time range includes at least one of the following:

the duration of the target time range is configured by a higher layer;
the duration of the target time range is reported or indicated by the terminal to the network-side device;
the duration of the target time range is determined according to a predefined rule; and
the duration of the target time range is associated with a service feature.

Optionally, the first UCI includes a bitmap, and the bitmap is used to indicate the releasable uplink transmission resource in the target set; or

the bitmap is used to indicate an index of a releasable CG PUSCH configuration in the target set; or
the first UCI indicates a number of a releasable PUSCH transmission occasion in the target set; or
the first UCI indicates a releasable initial PUSCH transmission occasion and the number of consecutive releasable PUSCH transmission occasions.

Optionally, a length of the bitmap is determined based on the number of PUSCH configurations or PUSCH transmission occasions in the target set, or is determined based on the total number of transmission occasions of all PUSCHs in the target set within one cycle.

Optionally, a plurality of CG PUSCHs included in the second CG PUSCH set meet at least one of the following:

the plurality of CG PUSCHs are associated with a same logical channel;

the plurality of CG PUSCH have a same periodicity;

an interval between time domain resources of the plurality of CG PUSCHs falls within a predefined range;

the plurality of CG PUSCHs are associated with a same TCI state; and

the plurality of CG PUSCHs have a same priority.

Optionally, the second CG PUSCH set indicated by the first UCI includes at least one of the following:

a second CG PUSCH set to which a CG PUSCH for transmitting the first UCI belongs;

a second CG PUSCH set located after the second CG PUSCH set to which the CG PUSCH for transmitting the first UCI belongs; and

a second CG PUSCH set corresponding to a PUCCH for transmitting the first UCI.

Optionally, the uplink transmission resource includes a CG PUSCH resource and/or a DG PUSCH resource.

In this embodiment of this application, the terminal may notify the network-side device of whether one or more specific uplink transmission resources are releasable by reporting the UCI, so that the network-side device may release a redundant uplink transmission resource based on the UCI reported by the terminal. This reduces a waste of resources and improves resource utilization.

An embodiment of this application further provides a network-side device, including a processor and a communication interface. The communication interface is configured to receive UCI sent by a terminal. The processor is configured to determine a releasable uplink transmission resource based on the UCI. The network-side device embodiment corresponds to the foregoing method embodiment for the network-side device, and all implementation processes and implementations of the foregoing method embodiment are applicable to the network-side device embodiment, with the same technical effect achieved.

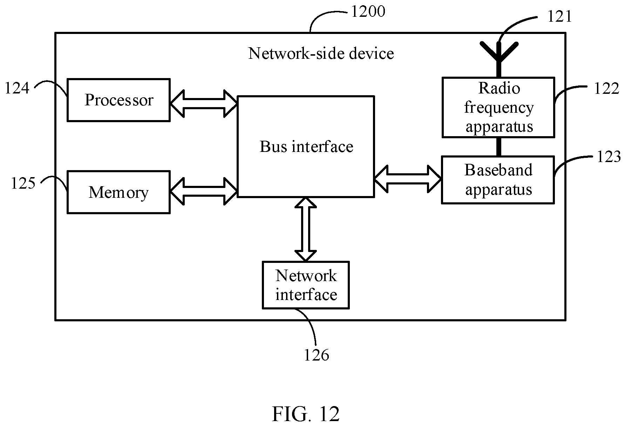

Specifically, an embodiment of this application further provides a network-side device. FIG. 12 is a schematic structural diagram of a network-side device according to an embodiment of this application. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information through the antenna 121.

The method performed by the network-side device in the foregoing embodiment may be implemented in the baseband apparatus 123, and the baseband apparatus 123 includes a baseband processor.

The baseband apparatus 123 may include, for example, at least one baseband board, where a plurality of chips are disposed on the baseband board. As shown in FIG. 12, one of the chips is, for example, the baseband processor, which is connected to the memory 125 through a bus interface, to invoke a program in the memory 125 to perform the operations of the network device shown in the foregoing method embodiments.

The network-side device may further include a network interface 126. The interface is, for example, a common public radio interface (common public radio interface, CPRI).

Specifically, the network-side device 1200 in this embodiment of this application further includes instructions or a program stored in the memory 125 and capable of running on the processor 124, and the processor 124 invokes the instructions or program in the memory 125 to perform the method performed by the modules shown in FIG. 9, with the same technical effect achieved. To avoid repetition, details are not described herein again.

An embodiment of this application further provides a readable storage medium. The readable storage medium stores a program or instructions. When the program or instructions are executed by a processor, the processes in the foregoing embodiments of the information reporting method are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing embodiments of the information reporting method, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the foregoing embodiments of the information reporting method, with the same technical effect achieved. To avoid repetition, details are not described herein again.

An embodiment of this application further provides an information reporting system, including a terminal and a network-side device. The terminal may be configured to perform the foregoing information reporting method corresponding to a terminal. The network-side device may be configured to perform the foregoing information reporting method corresponding to a network-side device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

**Claims**

1. An information reporting method, comprising:

   determining, by a terminal, UCI, wherein the UCI is used to indicate a releasable uplink transmission resource; and
   sending, by the terminal, the UCI to a network-side device.

2. The information reporting method according to claim 1, wherein the UCI comprises at least one of the following:

   first UCI, wherein the first UCI is used to indicate a releasable uplink transmission resource in a target set; and
   second UCI, wherein the second UCI is used to indicate that an uplink transmission resource within a target time range is releasable.

3. The information reporting method according to claim 2, wherein the target set comprises a first CG PUSCH set or a second CG PUSCH set; and
   the first CG PUSCH set comprises a CG PUSCH configured and/or activated for the terminal, and the second CG PUSCH set is a group of CG PUSCHs determined according to a predefined rule or configured by a higher layer.

4. The information reporting method according to claim 2, wherein a starting point of the target time range is determined according to a predefined rule, or is determined based on a starting or ending position of an uplink channel for transmitting the second UCI; and
   duration of the target time range comprises at least one of the following:

   the duration of the target time range is configured by a higher layer;
   the duration of the target time range is reported or indicated by the terminal to the network-side device;
   the duration of the target time range is determined according to a predefined rule; and
   the duration of the target time range is associated with a service feature.

**5.** The information reporting method according to claim 2 or 3, wherein the first UCI comprises a bitmap, and the bitmap is used to indicate the releasable uplink transmission resource in the target set; or

the bitmap is used to indicate an index of a releasable CG PUSCH configuration in the target set; or
the first UCI indicates a number of a releasable PUSCH transmission occasion in the target set; or
the first UCI indicates a releasable initial PUSCH transmission occasion and the number of consecutive releasable PUSCH transmission occasions.

**6.** The information reporting method according to claim 5, wherein a length of the bitmap is determined based on the number of PUSCH configurations or PUSCH transmission occasions in the target set, or is determined based on the total number of transmission occasions of all PUSCHs in the target set within one cycle.

**7.** The information reporting method according to claim 3, wherein a plurality of CG PUSCHs comprised in the second CG PUSCH set meet at least one of the following:

the plurality of CG PUSCHs are associated with a same logical channel;
the plurality of CG PUSCH have a same periodicity;
an interval between time domain resources of the plurality of CG PUSCHs falls within a predefined range;
the plurality of CG PUSCHs are associated with a same TCI state; and
the plurality of CG PUSCHs have a same priority.

**8.** The information reporting method according to claim 2, wherein the second CG PUSCH set indicated by the first UCI comprises at least one of the following:

a second CG PUSCH set to which a CG PUSCH for transmitting the first UCI belongs;
a second CG PUSCH set located after the second CG PUSCH set to which the CG PUSCH for transmitting the first UCI belongs; and
a second CG PUSCH set corresponding to a PUCCH for transmitting the first UCI.

**9.** The information reporting method according to any one of claims 1 to 8, wherein the uplink transmission resource comprises a CG PUSCH resource and/or a DG PUSCH resource.

**10.** An information reporting method, comprising:

receiving, by a network-side device, UCI sent by a terminal; and
determining, by the network-side device, a releasable uplink transmission resource based on the UCI.

**11.** The information reporting method according to claim 10, wherein the UCI comprises at least one of the following:

first UCI, wherein the first UCI is used to indicate a releasable uplink transmission resource in a target set; and
second UCI, wherein the second UCI is used to indicate that an uplink transmission resource within a target time range is releasable.

**12.** The information reporting method according to claim 11, wherein the target set comprises a first CG PUSCH set or a second CG PUSCH set; and
the first CG PUSCH set comprises a CG PUSCH configured and/or activated for the terminal, and the second CG PUSCH set is a group of CG PUSCHs determined according to a predefined rule or configured by a higher layer.

**13.** The information reporting method according to claim 11, wherein a starting point of the target time range is determined according to a predefined rule, or is determined based on a starting or ending position of an uplink channel for transmitting the second UCI; and
duration of the target time range comprises at least one of the following:

the duration of the target time range is configured by a higher layer;
the duration of the target time range is reported or indicated by the terminal to the network-side device;
the duration of the target time range is determined according to a predefined rule; and
the duration of the target time range is associated with a service feature.

**14.** The information reporting method according to claim 11 or 12, wherein the first UCI comprises a bitmap, and the bitmap is used to indicate the releasable uplink transmission resource in the target set; or

the bitmap is used to indicate an index of a releasable CG PUSCH configuration in the target set; or
the first UCI indicates a number of a releasable PUSCH transmission occasion in the target set; or

the first UCI indicates a releasable initial PUSCH transmission occasion and the number of consecutive releasable PUSCH transmission occasions.

15. The information reporting method according to claim 14, wherein a length of the bitmap is determined based on the number of PUSCH configurations or PUSCH transmission occasions in the target set, or is determined based on the total number of transmission occasions of all PUSCHs in the target set within one cycle.

16. The information reporting method according to claim 12, wherein a plurality of CG PUSCHs comprised in the second CG PUSCH set meet at least one of the following:

   the plurality of CG PUSCHs are associated with a same logical channel;
   the plurality of CG PUSCH have a same periodicity;
   an interval between time domain resources of the plurality of CG PUSCHs falls within a predefined range;
   the plurality of CG PUSCHs are associated with a same TCI state; and
   the plurality of CG PUSCHs have a same priority.

17. The information reporting method according to claim 11, wherein the second CG PUSCH set indicated by the first UCI comprises at least one of the following:

   a second CG PUSCH set to which a CG PUSCH for transmitting the first UCI belongs;
   a second CG PUSCH set located after the second CG PUSCH set to which the CG PUSCH for transmitting the first UCI belongs; and
   a second CG PUSCH set corresponding to a PUCCH for transmitting the first UCI.

18. The information reporting method according to any one of claims 10 to 17, wherein the uplink transmission resource comprises a CG PUSCH resource and/or a DG PUSCH resource.

19. An information reporting apparatus, applied to a terminal and comprising:

   a first determining module, configured to determine UCI, wherein the UCI is used to indicate a releasable uplink transmission resource; and
   a sending module, configured to send the UCI to a network-side device.

20. An information reporting apparatus, applied to a network-side device and comprising:

   a receiving module, configured to receive UCI sent by a terminal; and
   a second determining module, configured to determine a releasable uplink transmission resource based on the UCI.

21. A communication device, comprising a processor and a memory, wherein the memory stores a program or instructions capable of running on the processor, and when the program or instructions are executed by the processor, the information reporting method according to any one of claims 1 to 9 is implemented, or the information reporting method according to any one of claims 10 to 18 is implemented.

22. A readable storage medium, wherein the readable storage medium stores a program or instructions, and when the program or instructions are executed by a processor, the information reporting method according to any one of claims 1 to 9 is implemented, or the information reporting method according to any one of claims 10 to 18 is implemented.

FIG. 1

FIG. 2

A terminal determines UCI, where the UCI is used to indicate a releasable uplink transmission resource ⟵ 300

The terminal sends the UCI to a network-side device ⟵ 301

FIG. 3

A network-side device receives UCI sent by a terminal ⟵ 400

The network-side device determines a releasable uplink transmission resource based on the UCI ⟵ 401

FIG. 4

FIG. 5

FIG. 6

FIG. 7

800

Information reporting apparatus

First determining module — 810

Sending module — 820

FIG. 8

900

Information reporting apparatus

Receiving module — 910

Second determining module — 920

FIG. 9

1000

Communication device

1001 — Processor ⟺ Memory — 1002

FIG. 10

FIG. 11

FIG. 12

## INTERNATIONAL SEARCH REPORT

| International application No. |
| --- |
| **PCT/CN2023/092164** |

**A. CLASSIFICATION OF SUBJECT MATTER**

H04L27/00(2006.01)i

According to International Patent Classification (IPC) or to both national classification and IPC

**B. FIELDS SEARCHED**

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP: 指示, 释放, 上行, 传输, 资源, 配置, 授权, 传输块, 重复, 预定义, 规则, indication, release, uplink, transmission, resource, configuration, grant, block, repetition, redundancy

**C. DOCUMENTS CONSIDERED TO BE RELEVANT**

| Category* | Citation of document, with indication, where appropriate, of the relevant passages | Relevant to claim No. |
| --- | --- | --- |
| X | CN 107306169 A (ZTE CORP.) 31 October 2017 (2017-10-31) description, paragraphs [0037]-[0298] | 1-22 |
| A | CN 112994852 A (VIVO COMMUNICATION TECHNOLOGY CO., LTD.) 18 June 2021 (2021-06-18) entire document | 1-22 |
| A | WO 2022083611 A1 (VIVO COMMUNICATION TECHNOLOGY CO., LTD.) 28 April 2022 (2022-04-28) entire document | 1-22 |
| A | WO 2020140289 A1 (GUANGDONG OPPO MOBILE TELECOMMUNICATIONS CORP., LTD.) 09 July 2020 (2020-07-09) entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 June 2023** | **21 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092164**

| Patent document cited in search report | | | Publication date (day/month/year) | Patent family member(s) | | | Publication date (day/month/year) |
|---|---|---|---|---|---|---|---|
| CN | 107306169 | A | 31 October 2017 | WO | 2017181787 | A1 | 26 October 2017 |
| CN | 112994852 | A | 18 June 2021 | None | | | |
| WO | 2022083611 | A1 | 28 April 2022 | CN | 114390694 | A | 22 April 2022 |
| WO | 2020140289 | A1 | 09 July 2020 | CN | 112655262 | A | 13 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210495477